# EUROPÄISCHE PATENTSCHRIFT

(11) **EP 1 849 636 B1**
(45) Veröffentlichungstag und Bekanntmachung des Hinweises auf die Patenterteilung: **03.08.2011**
(21) Anmeldenummer: 07106145.1
(22) Anmeldetag: 13.04.2007
(51) Int. Cl.: B60J 1/20, B60J 3/00

(54) **Fensterscheibe für ein Fahrzeug zu Personenbeförderungszwecken mit einer Anzeigeeinrichtung**
Window pane for a vehicle for carrying passengers with a display device
Vitre d'une portière pour un véhicule destiné au transport de passagers doté d'un dispositif d'affichage

(30) Priorität: 20.04.2006 DE 102006018380
(43) Veröffentlichungstag der Anmeldung: 31.10.2007
(73) Patentinhaber: SIEMENS AKTIENGESELLSCHAFT, 80333 München (DE)
(72) Erfinder: Schillings, Dirk, 41472 Neuss (DE)

(56) Entgegenhaltungen:
- EP-A- 0 091 776
- EP-A- 1 464 632
- DE-A1- 10 352 226
- JP-A- 2000 108 660
- JP-A- 2002 173 347
- US-A- 5 829 507

## Beschreibung

Die Erfindung bezieht sich auf eine Fensterscheibe für ein Fahrzeug zu Personenbeförderungszwecken, mit einer Anzeigeeinrichtung, die auf die Fensterscheibe derart dauerhaft aufgebracht ist, dass mittels der Anzeigeeinrichtung dargestellte Zeichen durch die Fensterscheibe hindurch lesbar sind.

Solche Fensterscheiben kommen typischer Weise in Fahrzeugen für den öffentlichen Nahverkehr, wie Straßenbahnen, Stadtbahnen und Omnibussen, aber auch in Fahrzeugen des öffentlichen Fernverkehrs zum Einsatz. Die vorgesehene Anzeigeeinrichtung dient zur Information der Fahrgäste bezüglich reiserelevanter Daten. Diese können sich u. a. auf das Fahrziel, das Zugziel, aber auch auf einen Linienverlauf oder auch eine Zugnummer beziehen.

Das Dokument EP 1 464 632 A1 beschreibt eine Fensterscheibe mit Sensor offnung.

Eine Anzeigeeinrichtung wird typischer Weise hinter einer Seiten-, Front- oder Heckscheibe oder aber hinter gesondert angebrachten Scheiben, die ausschließlich für die Anzeigeeinrichtung verwendet werden, befestigt.

Gerade bei Anzeigeeinrichtungen für die genannten Zwecke wird es allgemein als wünschenswert angesehen, eine gute Ablesbarkeit zu gewährleisten. Außerdem soll sichergestellt werden, dass die Fensterscheibe auch Funktionen wie eine Beschränkung eines Lichteinfalls in einen Innenraum eines Fahrzeugs erfüllen kann.

Ausgehend hiervon liegt der Erfindung die Aufgabe zugrunde, eine Fensterscheibe bereitzustellen, bei der eine günstige Ablesbarkeit ihrer Anzeigeeinrichtung gegeben ist, wobei gleichzeitig die Fensterscheibe zur Verminderung eines Lichteinfalls von außen geeignet ist.

Diese Aufgabe wird bei der eingangs genannten Fensterscheibe dadurch gelöst, dass die Anzeigeeinrichtung auf ein Fensterelement der sie tragenden Fensterscheibe aufgebracht ist, dessen Tönung für den Einfall von Lichtstrahlung gegenüber einer Tönung eines Hauptkörpers der Fensterscheibe außerhalb des Fensterelementes vermindert ist.

Damit wird allgemein eine getönte Fensterscheibe vorgeschlagen, die in gewünschter Art und Weise einen Lichteinfall von außen vermindert. Um gleichzeitig eine zufrieden stellende Ablesbarkeit der Anzeigeeinrichtung herbeizuführen, ist die Tönung der Fensterscheibe in dem Bereich des Fensterelementes, das die Anzeigeeinrichtung trägt, vermindert. Auf diese Weise ist eine auf einer Innenseite der Fensterscheibe angeordnete Anzeigeeinrichtung von außerhalb eines Fahrzeugs besser ablesbar.

Gemäß einer ersten bevorzugten Ausführungsform der Fensterscheibe kann vorgesehen sein, dass sie einteilig ist. Dabei muss im Rahmen der Herstellung der Fensterscheibe sichergestellt werden, dass die Tönung des Fensterelementes geringer ausfällt als diejenige des Hauptkörpers der Fensterscheibe.

Alternativ dazu ist es auch möglich, dass das Fensterelement in einen Durchbruch der Fensterscheibe eingesetzt ist, wobei eine Zweiteiligkeit der Fensterscheibe gegeben ist. Letztgenannte Ausführungsform der Fensterscheibe hat den Vorteil, dass nicht in das Herstellungsverfahren der Fensterscheibe eingegriffen werden muss, so dass hierdurch ggf. anfallende zusätzliche Kosten vermieden werden. Beispielsweise kann das Fensterelement gemäß der im Stand der Technik bekannten "Flush"-Technologie ausgelegt sein.

Bei Zweiteiligkeit der Fensterscheibe kann das Fensterelement als Klarglaselement vorliegen, so dass hier vollständig auf eine Tönung verzichtet wird.

Die Anzeigeeinrichtung kann als LCD-Modul ausgeführt sein, das ein Gehäuse aufweist, welches auf das Fensterelement aufgebracht ist. Dabei kann die Anzeigeeinrichtung selbst ein vollständig abgeschlossenes Gehäuse aufweisen, wobei vor einem Anzeigefeld eine Sichtscheibe vorgesehen ist. Dieses Gehäuse wird unmittelbar auf das Fensterelement aufgebracht.

Bevorzugt ist jedoch das Fensterelement in das Gehäuse des LCD-Moduls integriert. In diesem Fall bildet das Fensterelement die Sichtscheibe des Gehäuses und ist damit ein Bestandteil davon. Bei dieser Ausführungsform beansprucht die Anzeigeeinrichtung weniger Raum und es entfällt eine gesonderte Befestigung innerhalb eines Fahrzeugs. Außerdem ist die Montage der Anzeigeeinrichtung wenig aufwendig, da sie lediglich auf das Fensterelement aufzubringen ist. Aufgrund der Tatsache, dass das Fensterelement die Sichtscheibe des Gehäuses bildet, ergibt sich auch ein gewisser Gewichtsvorteil gegenüber Bauweisen, bei denen vollständig in einem Gehäuse untergebrachte Anzeigeeinrichtungen auf das Fensterelement aufgebracht werden.

Alternativ zu der Ausbildung der Anzeigeeinrichtung als LCD-Modul ist es auch möglich, dass die Anzeigeeinrichtung als OLED-Folie (OLED: "Organic Light Emitting Diode) vorliegt. Eine solche Folie ist beispielsweise aus der DE 103 32 956 A1 bekannt. Diese Ausführungsform der Erfindung gewährleistet eine besonders raumsparende Unterbringung der Anzeigeeinrichtung. Aufgrund des geringen Gewichts der OLED-Folie ergibt sich außerdem ein Gewichtsvorteil gegenüber den oben angesprochenen LCD-Modulen. Die OLED-Folie benötigt keine zusätzliche indirekte Beleuchtung, da für diese Zwecke von außen einfallendes Licht ausreicht.

Zum Aufbringen der Anzeigeeinrichtung auf das Fensterelement kann es günstig sein, wenn die Anzeigeeinrichtung auf das Fensterelement aufgeklebt ist.

Die vorgestellte Fensterscheibe findet Anwendung in allen Arten von Personenbeförderungsfahrzeugen. Hinsichtlich der Ansteuerung der Anzeigeeinrichtung im Hinblick auf die Festlegung darzustellender Zeichen sind verschiedene Ausführungsformen denkbar. Eine zugehörige Anzeigenelektronik kann beispielsweise bei der Anzeigeneinrichtung in Form einer OLED-Folie entweder gesondert im Fahrzeug untergebracht oder ebenfalls direkt auf der Fensterscheibe platziert werden. Eine Kombination mit einer Linienverlaufsanzeige für den Innenraum des Fahrzeugs ist möglich. Bei der Ausführungsform der Anzeigeeinrichtung als in einem Gehäuse untergebrachtes LCD-Modul wird die elektronische Steuerung regelmäßig in dem Gehäuse untergebracht sein.

Ausführungsbeispiele der Erfindung werden nachfolgend anhand der Beschreibung unter Bezugnahme auf die Zeichnungen noch näher erläutert. Es zeigen:
- Figuren 1A, 1B: jeweils zwei einander entgegen gerichtete Ansichten einer ersten Ausführungsform einer Fensterscheibe, mit Anzeigeeinrichtung
- Figuren 2A, 2B: jeweils zwei einander entgegen gerichtete perspektivische Ansichten einer zweiten Ausführungsform einer Fensterscheibe mit Anzeigeeinrichtung und
- Figuren 3A, 3B: jeweils zwei einander entgegen gerichtete perspektivische auseinander gezogene Ansichten einer dritten Ausführungsform einer Fensterscheibe mit Anzeigeeinrichtung.

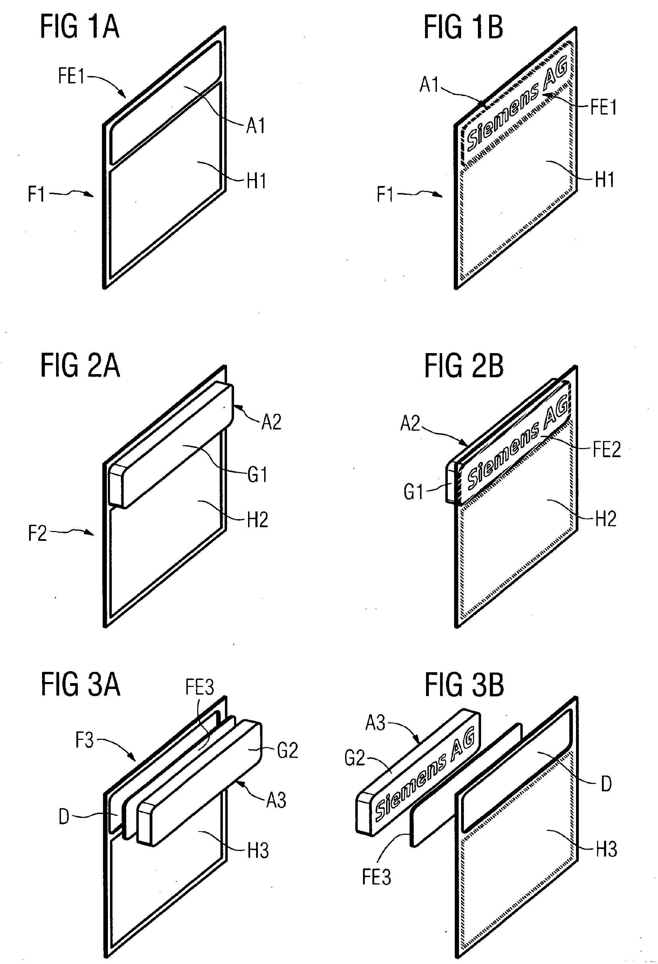

In den Figuren 1A, 1B ist jeweils eine erste Ausführungsform einer Fensterscheibe F1, beispielsweise für ein Schienenfahrzeug oder einen Bus, dargestellt, wobei die Figur 1A die Fensterscheibe F1 von derjenigen Seite zeigt, auf der eine Anzeigeeinrichtung A1 aufgebracht ist.

Ein Hauptkörper H1 der Fensterscheibe F1 besteht aus getöntem Glas, das zur Verminderung eines Lichteinfalls in den Innenraum eines Fahrzeugs, das mit der Fensterscheibe F1 ausgestattet ist, dient.

Der Hauptkörper H1 der Fensterscheibe F1 bildet deren mittleren und unteren Teil. Der obere Teil der Fensterscheibe F1 wird von einem ungetönten Fensterelement FE1 gebildet, das die Anzeigeeinrichtung A1 trägt. Die Anzeigeeinrichtung A1 ist auf das Fensterelement FE1 aufgeklebt.

Die Anzeigeneinrichtung A1 ist als OLED-Folie ausgebildet, welche unmittelbar auf das Fensterelement FE1 geklebt ist. In die OLED-Folie integriert ist außerdem eine Steuerungselektronik der Anzeigeeinrichtung A1.

Diese Ausführungsform ist besonders platz- und gewichtssparend.

Die anhand der Figuren 2A, 2B dargestellte zweite Ausführungsform einer Fensterscheibe F2 ist mit einer anderen Art von Anzeigeeinrichtung A2 versehen. Bei der Anzeigeeinrichtung A2 handelt es sich um eine LCD-Anzeige (LCD: "Liquid Crystal Display"). Ebenso wie die Anzeigeeinrichtung A1 ist die Anzeigeeinrichtung A2 im oberen Teil der Fensterscheibe F2 oberhalb eines Hauptkörpers H2 angeordnet. Die Anzeigeeinrichtung A2 ist in einem Gehäuse G1 untergebracht. Dabei ist das Gehäuse G1 vor einer Klebeverbindung mit der Fensterscheibe F2 oberhalb eines Anzeigefeldes offen. Diese Seite des Gehäuses G1 wird durch ein Fensterelement FE2 der Fensterscheibe F2 verschlossen.

Insofern kann davon gesprochen werden, dass das Gehäuse G2 mit der Fensterscheibe F1 integriert ist.

Die dritte Ausführungsform einer Fensterscheibe F3 ist in den Figuren 3A, 3B gezeigt. Eine Fensterscheibe F3 ist wie bei den beiden vorhergehend erläuterten Ausführungsformen mit einem getönten Hauptkörper H3 versehen, oberhalb dessen die Fensterscheibe F3 einen Durchbruch D aufweist, der in seinen Abmessungen im Wesentlichen den oben erläuterten Fensterelementen FE1, FE2 entspricht. Im Gegensatz zu den zuvor erläuterten Ausführungsformen von Fensterscheiben ist die Fensterscheibe F3 zweiteilig ausgebildet, denn der Durchbruch D dient zur Aufnahme eines gesonderten Fensterelementes FE3, das aus Klargas hergestellt ist. Das Fensterelement FE3 bildet gleichzeitig ein Sichtfenster für ein Gehäuse G2 einer Anzeigeeinrichtung A3, die ebenfalls als LCD-Anzeige ausgeführt ist.

## Patentansprüche

1. Fensterscheibe (F1, F2, F3) für ein Fahrzeug zu Personenbeförderungszwecken, mit einer Anzeigeeinrichtung (A1, A2, A3), die auf die Fensterscheibe (F1, F2, F3) derart dauerhaft aufgebracht ist, dass mittels der Anzeigeeinrichtung (A1, A2, A3) dargestellte Zeichen durch die Fensterscheibe (F1, F2, F3) hindurch lesbar sind,
**dadurch gekennzeichnet,**
**dass** die Anzeigeeinrichtung (A1, A2, A3) auf ein Fensterelement (FE1, FE2, FE3) der sie tragenden Fensterscheibe (F1, F2, F3) aufgebracht ist, dessen Tönung für den Einfall von Lichtstrahlung gegenüber einer Tönung eines Hauptkörpers (H1, H2, H3) der Fensterscheibe (F1, F2, F3) außerhalb des Fensterelementes (FE1, FE2, FE3) vermindert ist.

2. Fensterscheibe nach Anspruch 1,
**dadurch gekennzeichnet,**
**dass** sie einteilig ist.

3. Fensterscheibe nach Anspruch 1,
**dadurch gekennzeichnet,**
**dass** das Fensterelement (FE3) in einen Durchbruch (D) der Fensterscheibe (F1, F2, F3) eingesetzt ist.

4. Fensterscheibe nach Anspruch 3,
**dadurch gekennzeichnet,**
**dass** das Fensterelement (FE1, FE2, FE3) als Klarglaselement vorliegt.

5. Fensterscheibe nach einem der Ansprüche 1 bis 4,
**dadurch gekennzeichnet,**
**dass** die Anzeigeinrichtung (A2, A3) als LCD-Modul ausgeführt ist, das ein Gehäuse (G1, G2) aufweist, welches auf das Fensterelement (FE2, FE3) aufgebracht ist.

6. Fensterscheibe nach Anspruch 5,
**dadurch gekennzeichnet,**
**dass** das Fensterelement (FE2, FE3) in das Gehäuse (G1, G2) integriert ist.

7. Fensterscheibe nach einem der Ansprüche 1 bis 4,
**dadurch gekennzeichnet,**
**dass** die Anzeigeeinrichtung (A1) als OLED-Folie vorliegt.

8. Fensterscheibe nach einem der Ansprüche 1 bis 7,
**dadurch gekennzeichnet,**
**dass** die Anzeigeeinrichtung (A1, A2, A3) auf das Fensterelement (FE1, FE2, FE3) aufgeklebt ist.

## Claims

1. Window pane (F1, F2, F3) for a vehicle for carrying passengers, having a display device (A1, A2, A3) which is permanently mounted on the window pane (F1, F2, F3) in such a way that characters which are represented by means of the display device (A1, A2, A3) can be read through the window pane (F1, F2, F3),
**characterized**
**in that** the display device (A1, A2, A3) is mounted on a window element (FE1, FE2, FE3) of the window pane (F1, F2, F3) which bears said display device (A1, A2, A3), the shading of which is reduced for the incidence of light radiation compared to shading of a main body (H1, H2, H3) of the window pane (F1, F2, F3) outside the window element (FE1, FE2, FE3).

2. Window pane according to Claim 1,
**characterized**
**in that** said window pane is in one piece.

3. Window pane according to Claim 1,
**characterized**
**in that** the window element (FE3) is inserted into a breakthrough (D) in the window pane (F1, F2, F3).

4. Window pane according to Claim 3,
**characterized**
**in that** the window element (FE1, FE2, FE3) is present as a clear glass element.

5. Window pane according to one of Claims 1 to 4,
**characterized**
**in that** the display device (A2, A3) is embodied as an LCD module which has a housing (G1, G2) which is mounted on the window element (FE2, FE3).

6. Window pane according to Claim 5,
**characterized**
**in that** the window element (FE2, FE3) is integrated into the housing (G1, G2).

7. Window pane according to one of Claims 1 to 4,
**characterized**
**in that** the display device (A1) is present as an OLED film.

8. Window pane according to one of Claims 1 to 7,
**characterized**
**in that** the display device (A1, A2, A3) is bonded onto the window element (FE1, FE2, FE3).

## Revendications

1. Vitre ( F1, F2, F3 ) de portière pour un véhicule destiné au transport de passagers, comprenant un dispositif ( A1, A2, A3 ) d'affichage, qui est appliqué de manière permanente sur la vitre ( F1, F2, F3 ) de la portière de manière à pouvoir lire, à travers la vitre ( F1, F2, F3 ) de la portière, des signes représentés au moyen du dispositif ( A1, A2, A3 ) d'affichage,
**caractérisée,**
**en ce que** le dispositif ( A1, A2, A3 ) d'affichage est appliqué sur un élément ( FE1, FE2, FE3 ) de la portière de la vitre ( F1, F2, F3 ) portant le dispositif, dont la teinte est diminuée pour l'incidence d'un rayonnement lumineux par rapport à une teinte d'un corps ( H1, H2, H3 ) principal de la vitre ( F1, F2, F3 ) de la portière à l'extérieur de l'élément ( FE1, FE2, FE3 ) de la portière.

2. Vitre de portière suivant la revendication 1,
**caractérisée**
**en ce qu'**elle est d'une seule pièce.

3. Vitre de portière suivant la revendication 1,
**caractérisée**
**en ce que** l'élément ( FE3 ) de la portière est inséré dans une traversée ( D ) de la vitre ( F1, F2, F3 ) de la portière.

4. Vitre de portière suivant la revendication 3,
**caractérisée**
**en ce que** l'élément ( FE1, FE2, FE3 ) de la portière se présente sous la forme d'un élément en verre clair.

5. Vitre de portière suivant l'une des revendications 1 à 4,
**caractérisée**
**en ce que** le dispositif ( A2, A3 ) d'affichage est réalisé sous la forme d'un module LCD qui a un boîtier ( G1-G2 ), lequel est appliqué à l'élément ( FE2, FE3 ) de la portière.

6. Vitre de portière suivant la revendication 5,
**caractérisée,**
**en ce que** l'élément ( FE2, FE3 ) de la portière est intégré dans le boîtier ( G1, G2 ).

7. Vitre de portière suivant l'une des revendications 1 à 4,
**caractérisée,**
**en ce que** le dispositif ( A1 ) d'affichage se présente sous la forme d'une feuille OLED.

8. Vitre de portière suivant l'une des revendications 1 à 7,
**caractérisée,**
**en ce que** le dispositif ( A1, A2, A3 ) d'affichage est collé sur l'élément ( FE1, FE2, FE3 ) de la portière.
